# EUROPEAN PATENT APPLICATION

(11) **EP 3 888 815 A1**
(43) Date of publication of application: **06.10.2021**
(21) Application number: 21161093.6
(22) Date of filing: 05.03.2021
(51) Int. Cl.: B21J 15/02, B21J 15/36, F16B 19/08

(54) **SELF-PIERCING RIVET FASTENING METHOD AND FASTENING DEVICE**

(30) Priority: 13.03.2020 JP 2020043901
(71) Applicant: Newfrey LLC, New Britain, CT 06053 (US); Honda Giken Kogyo Ltd., Wako-shi, Saitama (JP)
(72) Inventor: YAMAGUCHI, Naoki, Toyohashi-shi, Aichi 441-8540 (JP); NARITA, Toshio, Toyohashi-shi, Aichi 441-8540 (JP); SUGIMOTO, Nao, Wako-shi, Saitama (JP)
(74) Representative: Witte, Weller & Partner Patentanwälte mbB

(57) **Abstract**

To provide a fastening method and a fastening device for a self-piercing rivet so that the adhesive force of the adhesive applied between the members to be fastened can be exerted to a greater degree, a rivet fastening method comprises a step of preparing at least two plates 201, 202 stacked via an adhesive layer; a step of preparing a rod-shaped punch having at least two openings 102a1, 102b1, 102b2 and an air flow path 102a, 102b through which the at least two openings are communicated; a step of preparing a self-piercing rivet 204 with a through hole 204d; and a step of driving the self-piercing rivet into the at least two plates with the punch so that one of the at least two openings in the punch 102a1 faces the through hole of the self-piercing rivet.

## Description

### [Technical Field]

The present disclosure relates to a self-piercing rivet (SPR) fastening method and fastening device; in particular to a SPR fastening method and fastening device having a through hole.

### [Background Art]

In recent years, a technique for mechanically joining a base metal using SPR has been used as an alternative technique to a direct joining technique such as spot welding. An SPR is a semi-cylindrical rivet having a chevron- or dish-shaped head and semi-cylindrical legs forming a cavity beneath the head. There is also an SPR in which a through hole is formed in the head, as described in FIGS. 1 and 2 of Patent Document 1. Patent Document 1 teaches that, by making the through hole stepped as shown in FIG. 2 of Patent Document 1, it is possible to prevent the shear debris of the member to be fastened from falling off when the SPR is driven into the member to be fastened.

The SPR is driven by the following procedure. First, the upper plate (for example, an aluminum plate) and the lower plate (for example, a high-strength steel plate) to be fastened are clamped by the die and the nose piece of the fastening device. When the SPR provided in the nose piece is punched, the legs of the SPR pierce and penetrate the upper plate. When the legs of the SPR penetrating the upper plate enter the lower plate and the lower surface of the lower plate comes into contact with the bottom of the die, the bottom of the die cavity pushes back the lower plate. As a result, the legs of the SPR receive a reaction force from the lower plate and open the legs in a ring shape in the lower plate without penetrating the lower plate. A mechanical interlock is formed by opening the legs of the SPR, and the upper plate and the lower plate are mechanically fastened. The die and nose piece separate from the member to be fastened and the fastening is completed.

The number of members to be fastened may be three or more. For example, in the case of three members, the upper plate and the intermediate plate are penetrated, and the lower plate is not penetrated. In the production of automobiles, an adhesive is often applied between the members to be fastened in order to improve the performance of Noise, Vibration, Harshness (NVH).

### [Prior Art Document]

### [Patent Document]

[Patent Document 1] Japan Unexamined Patent Application Publication No. 2003-106316

### [Summary of the Invention]

### [Problem to be Solved by the Invention]

According to the conventional method of fastening SPR using such an adhesive, it has been found that a phenomenon occurs in which the strength of the adhesive is not sufficiently exhibited.

The object of one aspect of the embodiments of the present disclosure is a fastening method and a fastening device for SPR in order to suppress the occurrence of such a phenomenon and thereby allow the adhesive applied between the members to be fastened to exert greater adhesive force.

### [Means for Solving the Problem]

By means of one aspect of the rivet fastening method according to one embodiment of the present disclosure, the method is equipped with a step of preparing at least two plates stacked via an adhesive layer, a step of preparing a rod-shaped punch having at least two openings and an air flow path communicating with the at least two openings, a step of preparing a self-piercing rivet having a through hole, and a step of punching the self-piercing rivet into the at least two plates with the punch so that one of the at least two openings of the punch faces the through hole of the self-piercing rivet.

By means of one aspect of the rivet fastening device according to one embodiment of the present disclosure, the device is equipped with at least two openings; a rod-shaped punch having an air flow path in which the at least two openings are communicated with each other; a tubular collet having an internal cavity through which the punch can be inserted and an air passage portion through which air can pass in the radial direction; a tubular nose piece that houses the collet; and a nose piece support portion that supplies a self-piercing rivet having a through hole and that supports the nose piece, the nose piece support portion having a first exhaust port for discharging air passing through the air passing portion of the collet to the outside; wherein the device is configured so that at the time of driving the self-piercing rivet, one of at least two openings in the punch faces the through hole of the self-piercing rivet.

### [Effects of the Invention]

By means of one aspect of the rivet fastening method according to one embodiment of the present disclosure, the method is equipped with a step wherein a self-piercing rivet having a through hole is driven by a rod-shaped punch, having at least two openings and an air flow path in which the at least two openings are communicated, into at least two plates stacked via an adhesive; wherein one of at least two openings in the punch is driven so as to face the through hole of the self-piercing rivet. Therefore, when the self-piercing rivet is driven, the air compressed in the internal cavity surrounded by the legs of the self-piercing rivet is exhausted to the outside through the through hole of the self-piercing rivet and the air flow path of the punch. Consequently, it is possible to prevent air from flowing out to the adhesive layer between the plate materials, so that the coating area of the adhesive at the fastening position can be secured, and the adhesive force of the adhesive can be further enhanced.

Similarly, by means of one aspect of the riveting device according to one embodiment of the present disclosure, when the self-piercing rivet is driven, one of at least two openings of the punch is configured to face the through hole of the self-piercing rivet, thereby enabling further enhancement of the adhesive force of the adhesive.

### [Brief Description of the Drawings]

[FIG. 1] is a configuration diagram of a rivet fastening device.
[FIG. 2] is a diagram showing an example of a hardware configuration of a control device.
[FIG. 3] is a diagram showing another example of a hardware configuration of a control device.
[FIG. 4] is a partial perspective view of a rivet fastening device. In [FIG. 4,] the members to be fastened are also shown.
[FIG. 5] is a cross-sectional view taken along the line AA of FIG. 4.
[FIG. 6] is a partial perspective view of a punch.
[FIG. 7] is a perspective view of a collet.
[FIG. 8] is a flowchart of a rivet fastening method.
[FIG. 9] is a diagram showing a flow path of compressed air.
[FIG. 10] is a diagram showing a flow path of compressed air.
[FIG. 11] is a diagram showing a flow path of compressed air.
[FIG. 12] is a photograph of a test piece (upper plate, lower plate) into which SPR has been driven.
[FIG. 13] is a graph showing the results of a cross peeling test.
[FIG. 14] is a photograph of an adhesive-coated surface of the peeled test piece in the case where the SPR has been driven into the test piece with a punch having an air flow path.
[FIG. 15] is a photograph of an adhesive-coated surface of the peeled test piece in the case where the SPR has been driven into the test piece with a normal punch having no air flow path.
[FIG. 16] is a diagram for explaining how compressed air flows in the internal cavity of SPR when the SPR has been driven into the test piece with a normal punch having no air flow path.
[FIG. 17] is an exploded view of a collet according to a modified embodiment.
[FIG. 18] is a front view of a collet according to another modified embodiment.
[FIG. 19] is a front view of a nose piece according to a modified embodiment.

### [Means for Carrying Out the Invention]

Hereinbelow, embodiments for carrying out the present invention will be described with reference to the accompanying drawings. By assigning the same or similar reference numbers to the same or similar members, duplicate description thereof is omitted. In order to explain the present invention in an easily comprehensible manner, the scale of the drawings is not constant.

### Overall Configuration of the Rivet Fastening Device

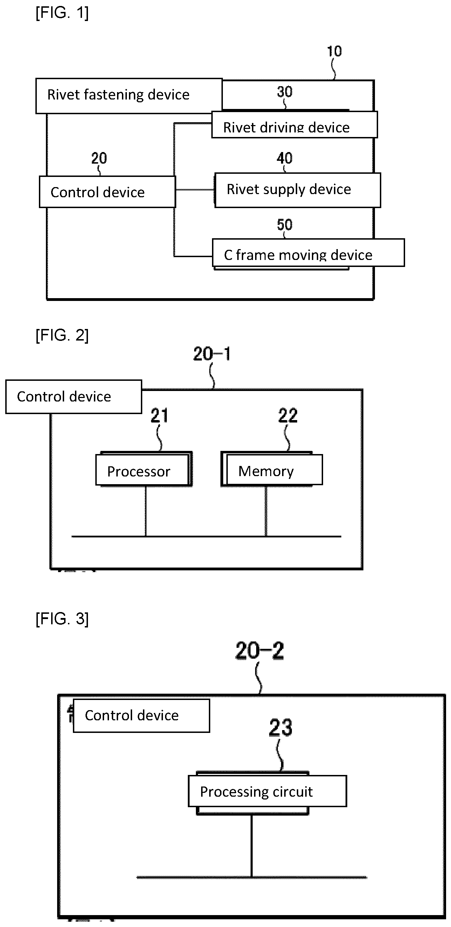

First, the configuration of the rivet fastening device will be described with reference to [FIG. 1]. As shown in FIG. 1, the rivet fastening device 10 is equipped with a control device 20, a rivet driving device 30, a rivet supply device 40 and a C frame moving device 50.

The control device 20 is a device for controlling the operation of the rivet driving device 30, the rivet supply device 40 and the C frame moving device 50. Although a single controller is illustrated in FIG. 1, the rivet fastening device 10 may include a plurality of control devices, and the operation of the rivet driving device 30, the rivet supply device 40, and the C frame moving device 50 may be controlled by the plurality of control devices. Further, in FIG. 1, the control device is drawn so as to be involved in all the operations of the rivet driving device 30, the rivet supply device 40, and the C frame moving device 50; however, the control device doesn't have to be involved in all the operations of the rivet driving device 30, the rivet feeding device 40, and the C-frame moving device 50. For example, a person may perform movement of the C-frame moving device.

The rivet driving device 30 is a device for driving the supplied rivet, and is equipped with an actuator (not shown). The actuator operates according to a command from the control device 20, and the operation of the actuator is converted into a linear reciprocating motion of the punch 102, which will be described later, and a rivet is driven.

The rivet supply device 40 is a device that supplies rivets to the rivet driving device 30. The rivet supply device 40 operates according to a command from the control device 20, and the rivet is supplied by utilizing the air pressure of compressed air.

The C-frame moving device 50 is a device for holding the member to be fastened at a predetermined position. The C-frame moving device 50 operates in accordance with a command from the control device 20, holds the member to be fastened at a predetermined position, and releases the member to be fastened when the rivet driving is completed. In some embodiments, the movement of the C-frame moving device is performed by a user.

### Hardware Configuration of Control Device

Next, the hardware configuration of the control device will be described with reference to FIGS. 2 and 3. FIG. 2 is a diagram showing an example of the hardware configuration of the control device 20; the control device 20 is realized by, for example, the control device 20-1.

The control device 20-1 is equipped with a processor 21 and a memory 22. The memory 22 stores a program for performing all or part of the punch 2 driving operation, the C frame moving operation, and the SPR supply operation; each operation is executed by the processor 21 reading and executing this program.

The processor 21 is, for example, a central processing unit (CPU), a graphics processing unit (GPU), a microprocessor, a microcontroller, or a digital signal processor (DSP).

The memory 22 uses, for example, a semiconductor memory or a magnetic disk. More specifically, the memory 22 is random access memory (RAM), read only memory (ROM), flash memory, erasable programmable read only memory (EPROM), electrically erasable programmable read-only memory (EEPROM), a solid-state drive (SSD) or a hard disk drive (HDD).

FIG. 3 is a diagram showing another example of the hardware configuration of the control device 20; the control device 20 is realized by, for example, control device 20-2. The control device 20-2 is equipped with a dedicated processing circuit 23 for performing all or part of the punch 2 driving operation, the C frame moving operation, and the SPR supply operation.

The processing circuit 23 is, for example, an application specific integrated circuit (ASIC), a programmable logic device (PLD), a field-programmable gate array (FPGA), a system-on-a-chip (SoC) or a system large-scale integration (LSI).

Each operation may be realized by any one device of the control device 20-1 or the control device 20-2, or may be realized by a plurality of devices combining the control device 20-1 and the control device 20-2.

### Detailed Configuration of the Rivet Fastening Device>

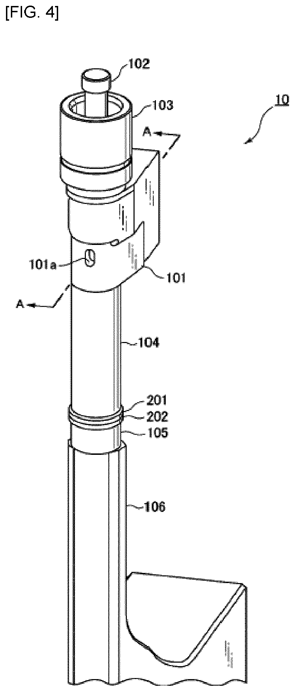

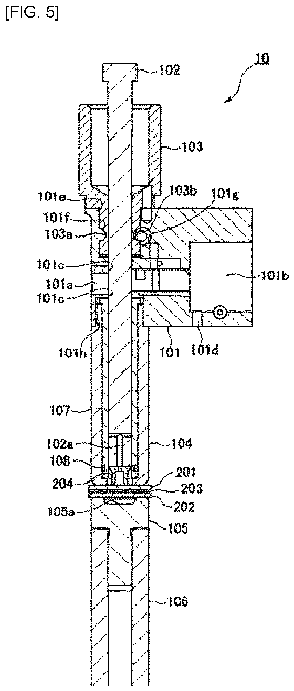

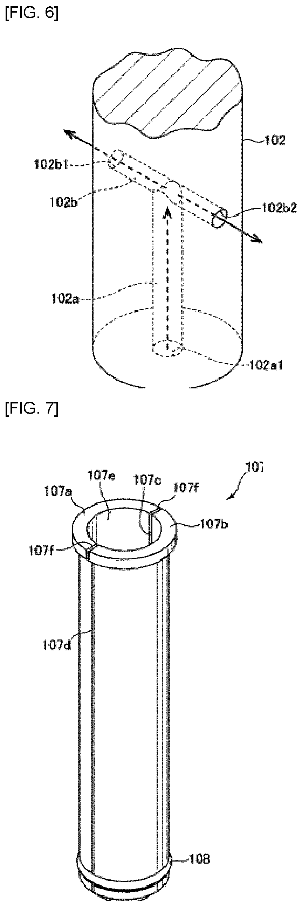

Next, the configuration of the rivet fastening device 10 will be described in more detail, mainly with reference to FIGS. 4 to 7. FIG. 4 is a partial perspective view of a portion where the member to be fastened is held by the rivet fastening device 10, and FIG. 5 is a sectional view taken along line AA of FIG. 4. FIG. 6 is a partial perspective view of the punch for driving the SPR, and FIG. 7 is a perspective view of a collet into which the punch is inserted when the SPR is driven.

As shown in FIG. 4, the rivet fastening device 10 has a receiver 101 for receiving self-piercing rivets (SPR) supplied one by one from the rivet supply device 40, a punch 102 for driving the supplied SPR, a punch holder 103 for slidably holding the punch 102, a nose piece 104 for protecting the linear motion when the punch 102 is driven, a die 105 that comes into contact with a part of the member to be fastened, and a C frame 106 for holding the die 105, one end of which is connected to the die 105. Further, not shown in the figure, the other end of the C frame 106 has a structure for holding a housing (not shown) for housing the punch holder 103.

As shown in FIG. 5, the receiver 101 has a passage 101b through which the SPR supplied from the supply device passes, and a rivet passage prevention wall 101c for stopping the advance of the SPR passing through the passage 101b. The rivet supply device 40 supplies SPR by utilizing the air pressure of the compressed air, and the receiver 101 is equipped with exhaust ports 101a and 101d for releasing the compressed air. A recess 101e is formed in the upper part of the receiver 101, and the tip of the punch holder 103 is fitted in the recess 101e. The receiver 101 has a protrusion 101f on a part of the wall surface forming the recess 101e so as to protrude into the recess 101e, and a through groove 101g formed so as to be recessed from the recess 101e on the wall surface opposite to the protrusion 101f. A recess 101h is formed in the lower portion of the receiver 101, and the nose piece 104 is press-fitted into the recess 101h with the collet 107 inserted into the nose piece 104.

The punch holder 103 slidably holds the punch 102. Although not shown, a housing (not shown) for housing the punch holder 103 is held by one end of the C frame 106. At the tip of the punch holder 103 are formed a concave groove 103a formed to match the shape of the protrusion 101f of the receiver 101, and a through groove 103b formed so as to face the through groove 101g of the receiver 101 when the punch holder 103 and the receiver 101 are fitted. The concave groove 103a extends the tip end portion of the punch holder 103 in the circumferential direction, for example, 1/4 turn, and further extends along the axial direction toward the tip end portion of the punch holder 103. The protrusion 101f of the receiver 101 is guided from the groove at the tip of the punch holder 103, and slides along the axial direction, and is further rotated in the circumferential direction so that the state as shown in FIG. 25 is obtained. The through groove 101g of the receiver 101 and the through groove 103b of the punch holder 103 are opposed to each other to integrally form a through hole. The punch holder 103 and the receiver 101 are fixed by inserting a rod-shaped lock member (not shown) into the through hole.

The punch 102 is a rod-shaped member for driving the supplied SPR 204 into the members to be coupled 201 and 202. The SPR 204 is delivered until it abuts the rivet passage prevention wall 101c; when held by the rivet passage prevention wall 101c and the rivet holding member by a spring or the like (not shown), the punch 102 drives the SPR 204 into the bonded members 201 and 202. The driving operation of the punch 102 is performed by the rivet driving device 30.

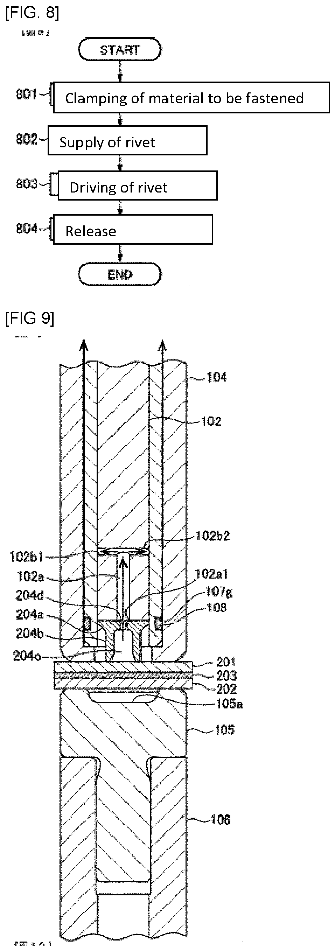

As shown in FIGS. 5 and 9, the SPR204 has a dish-shaped head 204a and a semi-cylindrical leg portion 204b hanging from the head 204a. The leg portion 204b forms a cavity 204c, and the head portion 204 has a through hole 204d with a diameter smaller than the diameter of the cavity portion 204c.

As shown in FIG. 6, the punch 102 has an air flow path 102a extending in the axial direction of the punch 102 and an air flow path 102b extending in a direction perpendicular to the axial direction thereof. One end of the air flow path 102a is opened at one end surface of the punch 102 that comes into contact with the SPR 204, and an opening 102a1 is formed at the end surface of the punch 102. The other end of the air flow path 102a communicates with the air flow path 102b. Both ends of the air flow path 102b are opened on the side surface of the punch 102, and openings 102b1 and 102b2 are formed on the side surface of the punch 102.

These air flow paths 102a and 102b included in the punch 102 are flow paths for letting air passing through the through hole 204d of the SPR 204 escape. That is, when the SPR204 is driven, the air in the cavity 204c of the SPR204 is surrounded by the head 204a, the legs 204b, and the upper plate 201 of the SPR and is compressed to a high pressure, so that the air escapes from the through hole 204d of the SPR204. The air flow paths 102a and 102b of the punch 102 are flow paths for further releasing the air that has escaped from the through hole 204d of the SPR204 in this way.

As long as such an object is achieved, the shape of the flow path provided in the punch 102 and the position where the flow path is provided can take various forms. For example, one flow path may extend in the punch 102 in an oblique shape or an L shape. Further, the air flow path 102b in FIG. 6 does not have to penetrate. In addition, a flow path in which the air flow path 102b is rotated by 90 degrees with respect to the axis of the punch 102 may be provided so as to communicate with the air flow paths 102a and 102b. Moreover, the position where the air flow path 102b is provided may be provided at another position, for example, a position where it overlaps with the exhaust port 101a of the receiver 101 when the punch 102 is driven and operated, or a position close to the exhaust port 101a.

As shown in FIG. 5, the nose piece 104 is attached to the receiver 101 by press-fitting its root portion into the recess 101h of the receiver 101. The inside of the nose piece 104 is hollow to accommodate the collet 107; the nose piece 104 is press-fitted into the recess 101h of the receiver 101 with the collet 107 inserted into the cavity of the nose piece 104. The tip of the nose piece 104 abuts the upper plate 201 and clamps the upper plate 201 and the lower plate 202 together with the die 105.

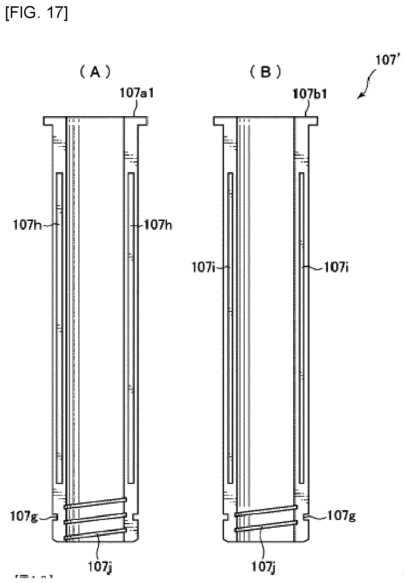

As shown in FIG. 7, the collet 107 is a member formed by fitting a plurality of, for example, two collet pieces 107a and 107b. For example, the collet piece 107a is provided with a fitting recess 107h, and the collet piece 107b is provided with a fitting protrusion 107i (see FIG. 17). The two collet pieces 107a and 107b are fitted so that the fitting recess 107h and the fitting protrusion 107i mesh with each other. By fitting the collet pieces 107a and 107b, the internal cavity 107e of the collet 107 is formed. In some embodiments, as shown in FIG. 5, collet pieces 107a, 107b are fixed using rubber O-rings 108 to prevent disengagement. Since the fitting portion has a diameter larger than the inner diameter of the collet 107, a diameter smaller than the outer diameter, and a length shorter than the total length, an inner groove 107c is formed on the inner wall of the collet 107, an outer groove 107d is formed on the outer wall, and an end groove 107f communicating the inner groove 107c and the outer groove 107d is formed at the end on the SPR insertion side. Air can move along these grooves. Further, since the portions where the collet pieces 107a and 107b are fitted are not in close contact with each other, high-pressure air can pass in the radial direction through the gap between the fitting portions of the collet pieces 107a and 107b, that is, the gap between the fitting recess 107h and the fitting protrusion 107i.

The receiver 101, the punch holder 103, and the nose piece 104 can integrally move linearly along the axial direction of the nose piece 104 by a driving means (not shown), such as a compression coil spring.

The die 105 is a member that supports the upper plate 202 and the lower plate 201. The die 105 has a cavity 105a at its head having a diameter larger than the outer diameter of the leg portion 204b of the SPR 204 so that the leg portion 204b can be opened when the SPR 204 is driven.

One end of the C frame 106 holds the die 105, as shown in FIG. 5. The other end of the C frame 106 is fixed to a housing (not shown) that houses the punch holder 103. Since a strong force of 20 to 100 kN is typically applied to the SPR when driving the SPR, the C frame 106 is made of a material having rigidity so that the alignment does not collapse even when such a strong force is applied.

### Operation

Next, the operation of the rivet fastening device 10 will be described with reference to the flowchart of FIG. 8. FIG. 8 is a flowchart of an operation in which the SPR is driven into the member to be fastened and fastened. The operation of FIG. 8 is performed by operating the rivet driving device 30, the rivet supply device 40, and the C frame moving device 50 in conjunction with each other under the control of the control device 20.

First, in step 801, the C frame 106 is positioned, and the member to be fastened overlapped with the adhesive is clamped by the nose piece 104 and the die 105. At this time, the punch holder 103, the nose piece 104, and the receiver 101 to which the punch holder 103 and the nose piece 104 are attached are integrally lowered, and the members to be fastened are clamped by the nose piece 104 and the die 105.

Next, in step 802, SPR204 is supplied to the receiver 101. The SPR204 is sent out from the supply device using the air pressure of compressed air, passes through the passage 101b, is fed to a position where it abuts the rivet passage prevention wall 101c, and is held by the rivet passage prevention wall 101c and a rivet holding member (not shown).

Next, in step 803, the punch 102 is pressed by a predetermined force and speed, and the SPR 204 is driven into the member to be fastened. In order to shorten the waiting time until the adhesive is cured, it is common to drive the SPR into the member to be fastened at the step in which the adhesive is not cured.

Next, in step 804, the member to be fastened is released from the nose piece 104 and the die 105.

### Operation

Next, the operation according to the embodiment of the present disclosure will be described with reference to FIGS. 9 to 11. FIGS. 9 to 11 are views showing a flow path of air compressed inside the cavity 204c of the SPR204 or outside the leg 204b of the SPR204 when the SPR204 is driven. When the SPR204 is driven into the upper plate 201, the air in the cavity 204c of the SPR204 is compressed and is highly pressurized, so that the compressed air flows toward the space where the pressure is low. A through hole 204d is provided in the head 204a of the SPR204. Since the punch 102 is driven so that the through hole 204d and the opening 102a1 of the punch 102 face each other, the through hole 204d and the air flow paths 102a and 102b communicate with each other.

Here, as explained earlier, since the collet 107 is formed by fitting the collet pieces 107a and 107b, and the fitted portions are not in close contact with each other, the air that is compressed, is highly pressurized and flows out from the openings 102b1 and 102b2 can pass through the fitting portions of the collet pieces 107a and 107b in the radial direction. The air that has passed through the fitting portions of the collet pieces 107a and 107b moves along the outer groove 107d as shown by the bold arrow in FIG. 9.

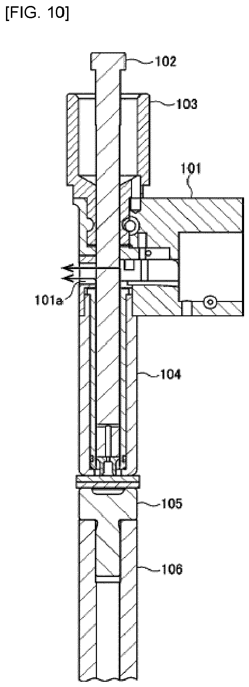

Further, as shown by the bold arrow in FIG. 10, the air flowing out from the openings 102b1 and 102b2 moves along the internal groove 107c. The air in the space outside the radial direction of the leg portion 204b of the SPR204 is also compressed when the SPR204 is driven and moves along the internal groove 107c. The air that has moved along the internal groove 107c is discharged to the external space from the exhaust port 101a of the receiver 101.

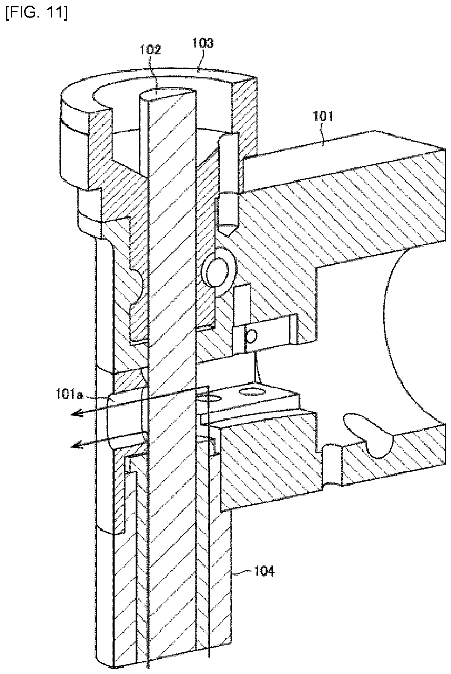

The air that has moved along the external groove 107d is also discharged to the external space from the exhaust port a of the receiver 101, as shown by the bold arrow in FIG. 11. In FIG. 11, the air moving along the outer groove 107d is drawn as if it were discharged from the exhaust port 101a across the punch 107; however, to be precise, it does not cross the punch 107, but goes around the gap between the punch 107 and the receiver 101 and is discharged from the exhaust port 101a.

### [Working Examples]

### Cross Peeling Test

### Working Example 1

In order to confirm the effect of the SPR fastening method according to the embodiment of the present disclosure, a cross peeling test was performed according to the following procedures.

First, a 40 mm × 125 mm upper plate (590 Mpa high-tensile material; plate boldness 1.6 mm) and a 40 mm × 125 mm lower plate (590 Mpa high-tensile material; plate boldness 1.6 mm) were prepared.

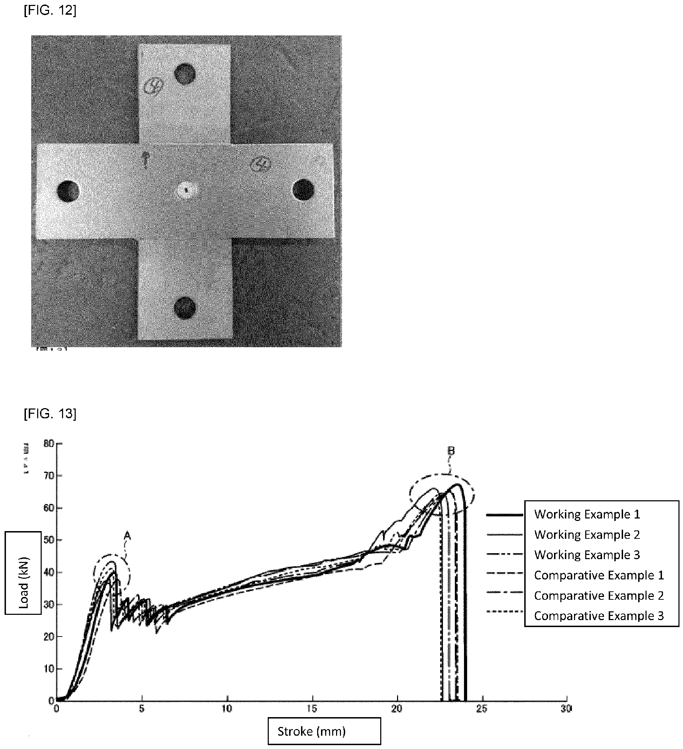

Next, press oil was applied to an overlap space of 40 mm × 40 mm; then adhesive was applied so as to achieve a boldness of 1 mm, and the layers were laminated in a cross shape as shown in FIG. 12.

Subsequently, SPR (SPR560F0C0-4Y1) was driven into the center of the overlap space using the rivet fastening device of the present disclosure.

### The adhesive was then cured at 170°C for 20 minutes.

Next, a tensile load was applied to the plate material fastened using a tensile tester at a tensile speed of 15 mm / min, and the maximum load until the fastened portion became broken was measured. In Working Example 1, an example in which the adhesive is heated and cured is shown, but there is also a type of adhesive that cures without applying heat. Therefore, the adhesive may be cured without heating to perform a cross-peeling test, and the type of adhesive may be other type.

### Working Example 2

The SPR was driven and a cross peeling test was performed under the same conditions as in Working Example 1,

### Working Example 3

The SPR was driven and a cross peeling test was performed under the same conditions as in Working Example 1,

### Comparative Examples 1 to 3

In order to verify the effects of the Working Examples, the SPR was driven under the same conditions as in Working Example 1, except that punching was performed with a normal punch that does not have an air flow path instead of punch 102, and the cross-peeling test was performed three times.

### Test results

Table 1 and FIG. 13 show the results of the above cross peeling test.

**[Table 1]**

| | Adhesive Peeling Maximum Load (kN) | Test Piece Peeling Maximum Load (kN) | | Adhesive Peeling Maximum Load (kN) | Test Piece Peeling Maximum Load (kN) |
|---|---|---|---|---|---|
| Working Example 1 | 3.988 | 6.741 | Comparative Example 1 | 3.766 | 6.534 |
| Working Example 2 | 3.778 | 6.613 | Comparative Example 2 | 3.656 | 6.519 |
| Working Example 3 | 4.344 | 6.469 | Comparative Example 3 | 4.109 | 6.241 |
| Average Value | 4.036 | 6.607 | Average Value | 3.844 | 6.431 |

In FIG. 13, the portion indicated by the broken line circle A represents the maximum load for the adhesive to peel off (the maximum adhesive peeling load). The portion indicated by the broken line circle B represents the maximum load at which the test piece peels off (the maximum load at which the test piece peels off).

From the test results in Table 1, comparing the average value of the working examples and the average value of the comparative examples with respect to the maximum adhesive peeling load, an increase of [(4.036-3.844) / 3.844] × 100 ≈ 5% was observed.

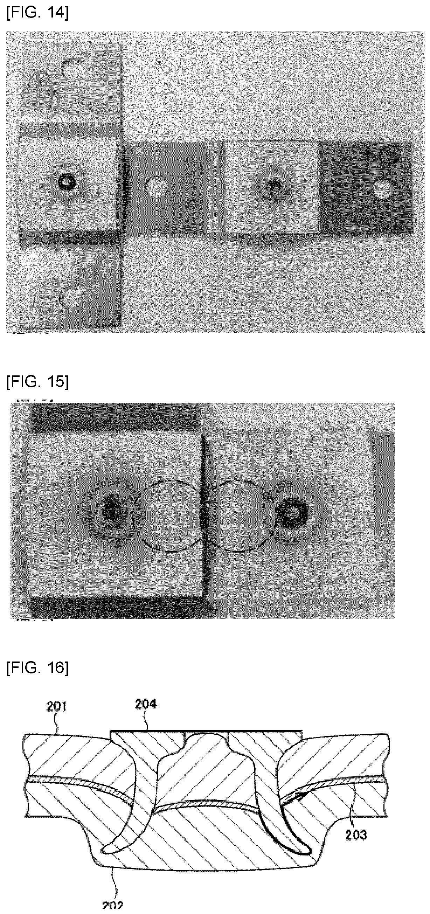

The reason for which the maximum adhesive peeling load increased in this manner is described with reference to FIGS. 14 to 16. FIG. 14 is a photograph of an example of the working examples, and FIG. 15 is a photograph of an example of the comparative examples. All photographs were taken of the adhesive-coated surface after the test piece was peeled off. In FIG. 14 according to the working examples, no particular characteristic appearance was observed on the adhesive-coated surface. On the other hand, in FIG. 15 according to the comparative examples, it can be confirmed that two white lines extend in the horizontal direction in the portion indicated by each broken line circle on the adhesive coating surface. The test piece on the left side of FIG. 15 is the lower plate, and the test piece on the right side is the upper plate.

It is considered that this laterally extending line is due to the compressed air in the internal cavity 204c of the SPR204 flowing out to the adhesive layer. That is, in the comparative examples, SPR204 was punched with a normal punch without the provision of an air flow path; therefore, the air compressed in the internal cavity 204c cannot flow out of the through hole 204d at the head of the SPR204. Consequently, the compressed air tries to move by searching for a portion having a relatively low pressure other than the through hole 204d, but it is the adhesive layer that has not yet hardened between the plates that acts as such a relatively low-pressure portion.

As shown in FIG. 16, the air compressed in the internal cavity 204c wraps around the leg portion 204b and reaches the adhesive layer 203 as shown by the bold arrow, and flows out to the external space from a specific direction in which the adhesive force is relatively weak.

Based on the above principle, it is considered that a white line was formed on the adhesive-coated surface in FIG. 15 according to the comparative examples. Such line is considered to indicate that the adhesive at the fastening interface has been pushed out by the air flowing out to the adhesive layer at the time of fastening. This means that in this case, the original coating area of the adhesive at the fastening position cannot be secured, and the original adhesive strength of the adhesive is not exhibited at the line portion. On the other hand, in FIG. 14 according to the working examples, air bleeding can be performed more effectively at the time of fastening, so that the adhesive at the fastening interface is prevented from flowing out, and no particular characteristic appearance is observed on the adhesive-coated surface. That is, in FIG. 14 according to the working examples, the coating area of the adhesive at the fastening position can be secured, and the original adhesive force of the adhesive can be exhibited. Therefore, it is considered that the difference in the maximum adhesive peeling load as shown in Table 1 was generated.

As described above, by increasing the maximum adhesive peeling load, it becomes possible to exhibit the original expected performance of the adhesive. That is, by increasing the maximum adhesive peeling load, the plate material does not peel off even if it is pulled by a tensile force that has conventionally caused peeling, so that the adhesive state can be maintained. As a result, the noise, vibration, and harshness (NVH) performance of the adhesive can be maintained.

Further, by maintaining the adhesive strength of the adhesive, the redundancy of the joint can be maintained, which leads to improvement of the safety and reliability of the joint. That is, since the fastened state by the adhesive and the fastened state by the SPR are maintained, the safety and reliability of the fastened portion are improved.

### Modified Embodiments

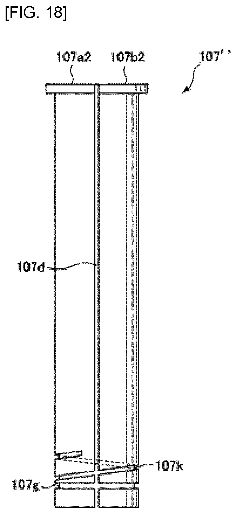

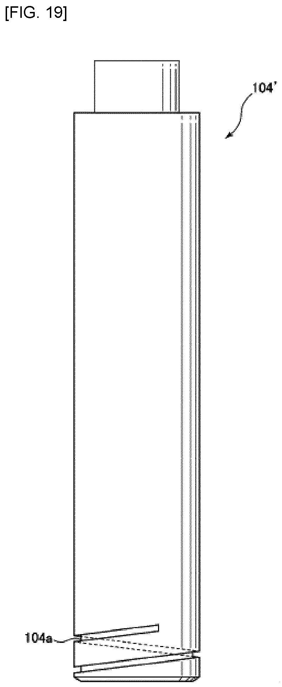

Hereinbelow, modified embodiments obtained by modifying the embodiments according to the present disclosure are described with reference to FIGS. 17 to 19. FIG. 17 is an exploded view of the collet 107' according to one modified embodiment, and FIG. 18 is a front view of the collet 107' according to another modified embodiment. Further, FIG. 19 is a front view of the nose piece according to one modified embodiment.

As shown in FIG. 17, in the modified embodiment, the inner wall of the tip portion of the collet pieces 107a1 and 107b1 is provided with an inner wall groove 107j which becomes a spiral groove when the pieces are fitted. Since the inner wall groove 107j has a spiral shape, the inner wall groove 107j and the inner groove 107c are communicated with each other. Further, since the inner wall groove 107j has a spiral shape, when the punch 102 is driven, the openings 102b1 and 102b2 of the punch 102 always face the inner wall groove 107j once regardless of the direction of the punch 102. Therefore, when the punch 102 is driven, the air flowing out from the openings 102b1 and 102b2 of the punch 102 can be easily guided to the internal groove 107c, and the air can be bled more effectively. Consequently, it can be expected that the adhesive at the fastening interface is more effectively suppressed from flowing out at the time of fastening, the coating area of the adhesive at the fastening position is more reliably secured, and the maximum adhesive peeling load is further increased.

As shown in FIG. 18, in another modified embodiment, the tip of the collet is provided with a spiral through groove 107k that allows communication of the internal cavity 107e of the collet with the external space. Since the through groove 107k has a spiral shape, when the punch 102 is driven, the openings 102b1 and 102b2 of the punch 102 always face the through groove 107k once regardless of the direction of the punch 102. Therefore, when the punch 102 is driven, the air flowing out of the openings 102b1 and 102b2 of the punch 102 can be easily guided to the outside of the collet 107", and the air can be bled more effectively. For that reason, it is expected that the adhesive at the fastening interface will be more effectively suppressed from outflow at the time of fastening, the coating area of the adhesive at the fastening position will be more reliably secured, and the maximum adhesive peeling load will be further increased.

As shown in FIG. 19, the nose piece 104' according to the one modified embodiment has a spiral through groove 104a that allows communication of the internal space with the external space of the nose piece 104' at the tip end portion of the nose piece 104'. Since the through groove 104a has a spiral shape, at least a part of the through groove 104a faces the outer groove 107d of the collet regardless of the orientation of the outer groove 107d of the collet. Therefore, the air flowing out to the outer groove 107d of the collet can be effectively discharged to the outer space of the nose piece 104'.

Further, in some embodiments, the collet 107" is inserted into the nose piece 104 so that the through groove 104a of the nose piece 104' and the through groove 107k of the collet 107" overlap. By arranging in this way, the air flowing out through the through groove 107k can be effectively discharged to the external space of the nose piece 104'.

In addition, in some embodiments, the winding direction of the spiral through groove of the nose piece 104' is opposite to the winding direction of the spiral through groove 107k of the collet 107". By reversing the direction of the spiral in this way, when the collet 107" is inserted into the nose piece 104', the through groove of the nose piece 104' and the through groove 107k of the collet 107" always intersect. Therefore, the air flowing out through the through groove 107k can be effectively discharged to the external space of the nose piece 104' regardless of the insertion direction of the collet 107".

In this way, air can be bled more effectively at the time of fastening, so that it is possible to expect that the adhesive will be prevented from flowing out at the fastening position, the coating area of the adhesive will be secured, and the maximum adhesive peeling load will be increased.

Machine fastening using SPR is performed on two or more plate materials, and, in many cases, dissimilar materials such as steel plates and aluminum plates are fastened. The shape of the SPR stud is that of a bag shape, and when fastening two materials, a cylindrical claw (leg) penetrates the upper plate material, penetrates into the second plate, and the tip of the claw (leg) expands to fasten the upper plate and the lower plate. Here, the amount of expansion of the claws (legs) is referred to as "interlock," and securing this interlock is an extremely important factor in this fastening method (SPR). In addition, an adhesive is often applied between the materials to be fastened, with the aim of improving the robustness of the fastened structure and preventing electrolytic corrosion. Therefore, securing the coating area of the adhesive is also an important factor.

In the conventional SPR fastening method, a phenomenon occurs thought to be that the strength of the adhesive is not sufficiently exhibited. Regarding this point, the present invention has found the following two points as more specific problems in the prior art, and has resolved them.
1. When there is adhesive between the plates and SPR fastening is performed, it becomes difficult to secure the interlock due to accumulation of adhesive.
2. When there is adhesive between the plates and SPR fastening is performed, since the rivet shape is bag-shaped, the rivet penetrates the material to be fastened while air is mixed in, and the air bursts at the time of fastening, generating places where the adhesive of the fastening interface cannot be applied. As a result, it becomes impossible to secure 100% of the adhesive area.

The present invention solves the above problems mainly by processing the head part of the rivet (hole for air to escape during cold forging) and providing an air flow path in the fastening mechanism including the punch, so that it is possible to secure the amount of interlock and the fastening area at the same time. As a result, according to the present invention, it is possible to secure the fastening strength by securing the interlock, and it is possible to secure the robustness of the mechanical fastening joint using the adhesive by securing the fastening area.

It should be noted that the present invention can be implemented by combining, modifying, or omitting the components of the disclosed embodiments within the scope of the invention.

### [Appendices]

Some of the various embodiments disclosed in the present specification will be summarized below.

### Appendix 1

The rivet fastening method according to Appendix 1 is equipped with a step of preparing at least two plates (201, 202) stacked via an adhesive layer;
a step of preparing a rod-shaped punch having at least two openings (102a1, 102b1, 102b2) and an air flow path (102a, 102b) through which the at least two openings are communicated;
a step of preparing a self-piercing rivet (204) with a through hole (204d); and
a step of driving the self-piercing rivet into the at least two plates with the punch so that one of the at least two openings in the punch (102a1) faces the through hole of the self-piercing rivet. By means of the rivet fastening method according to Appendix 1, air compressed in the internal cavity surrounded by the legs of the self-piercing rivet when the self-piercing rivet is driven can be exhausted to the outside through the through hole of the self-piercing rivet and the air flow path of the punch. Therefore, it is possible to prevent air from flowing out to the adhesive layer between the plate materials, so that the coating area of the adhesive at the fastening position can be secured, and the adhesive force of the adhesive can be further enhanced.

### Appendix 2

The rivet fastening method according to Appendix 2 is the rivet fastening method described in Appendix 1,
further comprising a step of placing at least two stacked plates on the die;
wherein the step of preparing the self-piercing rivet is a step of preparing the self-piercing rivet on the side of at least two stacked plates opposite to the die.

The rivet fastening method according to Appendix 2 can be configured so that the plate material can be supported by the die, and so that, by arranging the die on the opposite side of the plate material from the self-piercing rivet, the legs of the self-piercing rivet can be opened in the die when the self-piercing rivet is driven.

### Appendix 3

The rivet fastening device according to Appendix 3 is equipped with a rod-shaped punch having at least two openings (102a1, 102b1, 102b2) and an air flow path (102a, 102b) through which the at least two openings are communicated;
a tubular collet (107) having an internal cavity (107e) through which the punch can be inserted and an air passing portion (107h, 107i, 107k) through which air can pass in the radial direction; and
a nose piece support portion (101) that supplies a tubular nose piece (104) for housing the collet and a self-piercing rivet (204) having a through hole (204d), and which supports the nose piece, the nose piece support portion (101) having a first exhaust port (101a) for discharging air passing through the air passing portion of the collet to the outside;
the device configured so that when driving the self-piercing rivet, one of at least two openings (102a1) of the punch is opposed to the through hole of the self-piercing rivet.

By means of the rivet fastening device according to Appendix 3, when driving a self-piercing rivet, the air in the cavity (204c) of the self-piercing rivet can be exhausted to the outside via, in order, self-piercing rivet through hole (204d), air flow paths (102a, 102b) in the punch, at least two openings (102a1, 102b1, 102b2), collet air passages (107h, 107i, 107k), and first exhaust port (102a) of the nose piece support portion. Therefore, it is possible to suppress the outflow of air to the adhesive layer between the plate materials, so that the coating area of the adhesive at the fastening position can be secured, and the adhesive strength of the adhesive can be further enhanced.

### Appendix 4

The rivet fastening device according to Appendix 4 is the rivet fastening device according to Appendix 3, wherein the collet consists of at least two collet pieces (107a, 107b), and the air passing portion is equipped with a gap in a portion of the two or more collet pieces to which the first collet piece and the second collet piece are connected.

According to the rivet fastening device according to Appendix 4, air from at least two openings in the punch can be more efficiently caused to flow out of the collet through the gaps where the first and second collet pieces of the collet are connected to bleed air.so that air bleeding can be performed more effectively.

### Appendix 5

The rivet fastening device according to Appendix 5 is the rivet fastening device according to Appendices 3 or 4, wherein the air passing portion is equipped with a through groove (107k). By means of the rivet fastening device according to Appendix 5, the air flowing out from at least two openings of the punch can be more efficiently guided to the outside of the collet through the through groove (107k), and the air can be bled more effectively.

### Appendix 6

The rivet fastening device according to Appendix 6 is the rivet fastening device according to any one of Appendices 3 to 5, wherein the nose piece has a second exhaust port (104a) for exhausting air passing through the collet to the outside.

By the rivet fastening device according to Appendix 6, the air flowing out to the outer groove 107d of the collet can be effectively discharged to the outer space of the nose piece through the second exhaust port (104a), and the air can be bled more effectively.

### [Explanation of Reference Numerals]

- 10:: Rivet fastening device
- 20 (20-1, 20-2):: Control device
- 21:: Processor
- 22:: Memory
- 23:: Processing circuit
- 30:: Rivet driving device
- 40:: Rivet supply device
- 50:: C frame moving device
- 101:: Receiver (nose piece support portion)
- 101a:: Exhaust port (first exhaust port)
- 101b:: Passage
- 101c:: Rivet passage prevention wall
- 101d:: Exhaust port
- 101e:: Recess
- 101f:: Protrusion
- 101g:: Through groove
- 101h:: Recess
- 102:: Punch
- 102a:: Air flow path
- 102a1:: Opening
- 102b:: Air flow path
- 102b1:: Opening
- 102b2:: Opening
- 103:: Punch holder
- 103a:: Concave groove
- 103b:: Through groove
- 104, 104':: Nose piece
- 104a:: Through groove
- 105:: Die
- 105a:: Cavity
- 106:: C frame
- 107, 107', 107":: Collet
- 107a, 107a1, 107a2, 107b, 107b1, 107b2:: Collet piece
- 107c:: Internal groove
- 107d:: External groove
- 107e:: Internal cavity
- 107f:: End groove
- 107g:: O-ring groove
- 107h:: Fitting recess (air passage part)
- 107i:: Fitting protrusion (air passage part)
- 107j:: Inner wall groove
- 107k:: Through groove (air passage part)
- 108:: O-ring
- 201:: Upper plate
- 202:: Lower plate
- 203:: Adhesive layer
- 204:: Self-piercing rivet
- 204a:: Head
- 204b:: Legs
- 204c:: Cavity
- 204d:: Through hole

## Claims

1. A rivet fastening method comprising
a step of preparing at least two plates stacked via an adhesive layer,
a step of preparing a rod-shaped punch having at least two openings and an air flow path communicating with the at least two openings,
a step of preparing a self-piercing rivet having a through hole, and
a step of punching the self-piercing rivet into the at least two plates with the punch so that one of the at least two openings of the punch faces the through hole of the self-piercing rivet.

2. The rivet fastening method according to claim 1, further comprising a step of placing the at least two stacked plates on a die, wherein the step of preparing the self-piercing rivet is a step of preparing or positioning the self-piercing rivet on the side of the at least two stacked plates opposite to the die.

3. A rivet fastening device, equipped with at least two openings;
a rod-shaped punch having an air flow path in which the at least two openings are communicated with each other;
a tubular collet having an internal cavity through which the punch can be inserted and an air passage portion through which air can pass in the radial direction;
a tubular nose piece that houses the collet; and
a nose piece support portion that supplies a self-piercing rivet having a through hole and that supports the nose piece, the nose piece support portion having a first exhaust port for discharging air passing through the air passing portion of the collet to the outside;
wherein the device is configured so that at the time of driving the self-piercing rivet, one of at least two openings in the punch faces the through hole of the self-piercing rivet.

4. The rivet fastening device according to claim 3, wherein the collet consists of at least two collet pieces, and the air passing portion is equipped with a gap in a portion of the two or more collet pieces to which the first collet piece and the second collet piece are connected.

5. The rivet fastening device according claims 3 or 4, wherein the air passing portion is equipped with a through groove.

6. The rivet fastening device according to any one of claims 3 to 5, wherein the nose piece has a second exhaust port for exhausting air passing through the collet to the outside.
